# EUROPÄISCHE PATENTSCHRIFT

(11) **EP 1 315 131 B1**
(45) Veröffentlichungstag und Bekanntmachung des Hinweises auf die Patenterteilung: **23.03.2005**
(21) Anmeldenummer: 01250412.2
(22) Anmeldetag: 23.11.2001
(51) Int. Cl.: G07F 19/00, H04Q 7/22

(54) **Verfahren zum Ermöglichen eines Geldausgleichs zwischen Zahlungssystemen in Kommunikationsnetzen**
Method enabling money clearing between payment systems in communication networks
Méthode permettant la compensation d'argent entre systèmes de payement dans un réseau de communication

(43) Veröffentlichungstag der Anmeldung: 28.05.2003
(73) Patentinhaber: SIEMENS AKTIENGESELLSCHAFT, 80333 München (DE)
(72) Erfinder: Klatt, Uwe, 13507 Berlin (DE); Ryll, Thomas, 10823 Berlin (DE)

(56) Entgegenhaltungen:
- WO-A-01/73577
- US-A- 5 920 847
- US-B1- 6 198 922
- "Digital cellular telecommunications system (Phase 2+) (GSM);" ETSI TS 100 616 V7.0.1 (1999-07), 17. August 1999 (1999-08-17), Seiten 13-15, XP002194650
- "Digital cellular telecommunications system (Phase 2+) (GSM); Universal Mobile Telecommunications System (UMTS); Charging and Billing" ETSI TS 122 115 V3.2.0 (2000-01), 1. Februar 2000 (2000-02-01), XP002194651
- BREMER R: "Inter-PLMN handover-an approach for a functional requirement description" 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6 - 10, 1995, IEEE INTERNATIONAL CONFERENCE ON UNIVERSAL PERSONAL COMMUNICATIONS, NEW YORK, IEEE, US, Bd. CONF. 4, 6. November 1995 (1995-11-06), Seiten 442-446, XP010160578 ISBN: 0-7803-2955-4

## Beschreibung

Die Erfindung betrifft ein Verfahren zum Ermöglichen eines einen Kaufvorgang betreffenden Geldausgleiches zwischen Zahlungssystemen in Kommunikationsnetzen.

Es werden zum Beispiel beim sogenannten "Elektronischen Handel" ("E-Commerce") Kaufvorgänge unter Nutzung von Kommunikationsnetzen durchgeführt. Solche Kaufvorgänge können z.B. kostenpflichtige Dienste oder Leistungen (z.B. Lieferung von Informationen, Daten oder Waren) betreffen. Als derartige Kommunikationsnetze werden beispielsweise das Internet oder Telekommunikationsnetze (Mobilfunknetze, Festnetze) genutzt. Zur Bezahlung können bei diesen Kaufvorgängen z.B. bargeldlose Bezahlverfahren unter Nutzung von mobilen Kommunikationsendgeräten (z.B. Mobiltelefonen, PDA - Personal Digital Assistant, tragbaren Computern - Laptop, Palmtop) oder unter Nutzung von an das Internet angeschlossenen Rechnern genutzt werden.

Oftmals führen Käufer und Verkäufer die relativ aufwändigen Zahlungsvorgänge nicht selbst aus, sondern bedienen sich der Hilfe von Zahlungsdienstleistern, sog. "Payment Service Providern", welche Zahlungssysteme zum Abwickeln von Zahlungsvorgängen betreiben. An derartigen Zahlungsvorgängen sind also oftmals der Verkäufer (z.B. ein Händler, Service Provider, Merchant), der Käufer (z.B. ein Kunde, Consumer) und ein Zahlungssystem eines Zahlungsdienstleisters beteiligt, wobei sowohl der Verkäufer als auch der Käufer die Dienste des Zahlungsdienstleisters in Anspruch nehmen.

Aus der Patentschrift US 5,920,847 ist ein elektronisches Rechnungszahlungssystem bekannt, bei dem ein Konsument eine einen Zahlbetrag enthaltende Rechnung erhält. Daraufhin übermittelt der Konsument einen Zahlauftrag an seine Bank und die Bank übermittelt eine Zahlungsnachricht über ein Zahlungsnetzwerk an eine Bank des Rechnungsabsenders. Im Folgenden belastet die Bank des Konsumenten ein Konsumentenkonto und die Bank des Nachrichtenabsenders nimmt eine Gutschrift auf einem ihr zugeordneten Konto vor.

Aus der internationalen Patentanmeldung WO 01/73577 A2 ist ein elektronisches Revenue-Settlement-System bekannt, bei dem die Aktivitäten eines Kunden überwacht werden und - basierend auf Kundenaktionen - von einem Händler eine finanzielle Stimulierung des Kunden durchgeführt wird. Es erfolgt zum Beispiel eine Gutschrift auf einer Kundenrechnung.

Es ist Aufgabe der vorliegenden Erfindung, ein Verfahren anzugeben, mit dem auf einfache und zuverlässige Art und Weise ein einen Kaufvorgang betreffender Geldausgleich auch dann ermöglicht werden kann, wenn der Käufer und der Verkäufer die Dienste verschiedener Zahlungsdienstleister nutzen und daher mehrere Zahlungssysteme an dem Kaufvorgang beteiligt sind.

Diese Aufgabe wird erfindungsgemäß gelöst durch ein Verfahren zum Ermöglichen eines einen Kaufvorgang betreffenden Geldausgleiches zwischen einem ersten Zahlungssystem eines ersten Kommunikationsnetzes und einem zweiten Zahlungssystem, wobei dem ersten Zahlungssystem ein Käufer und dem zweiten Zahlungssystem ein Verkäufer zugeordnet ist, wobei bei dem Verfahren bei Eintreffen einer den Käufer betreffenden Kaufnachricht bei dem ersten Zahlungssystem von diesem ersten Zahlungssystem eine Geld-Belastung des Käufers mit einem von der Kaufnachricht abhängigen Geldbetrag veranlasst wird, von dem ersten Zahlungssystem ein erster, den Kaufvorgang betreffender Datensatz erzeugt wird, der in seiner Struktur Datensätzen entspricht, die in Telekommunikationsnetzen zur Abrechnung von Telekommunikationsverbindungen genutzt werden, von dem ersten Zahlungssystem eine Bestätigungsnachricht über die Geld-Belastung an das zweite Zahlungssystem übertragen wird, daraufhin von dem zweiten Zahlungssystem eine Geld-Gutschrift auf einem dem Verkäufer zugeordneten Verkäuferkonto veranlasst wird, von dem zweiten Zahlungssystem ein zweiter, den Kaufvorgang betreffender Datensatz erzeugt wird, der in seiner Struktur Datensätzen entspricht, die in Telekommunikationsnetzen zur Abrechnung von Telekommunikationsverbindungen genutzt werden, wobei als erster Datensatz und als zweiter Datensatz einander zuordenbare Datensätze erzeugt werden, von dem ersten Zahlungssystem der erste Datensatz zu einer zur Abrechnung von Telekommunikationsdienstleistungen zwischen Telekommunikationsnetzen vorgesehenen Abrechnungsstelle übertragen wird und von dem zweiten Zahlungssystem der zweite Datensatz zu der Abrechnungsstelle übertragen wird, um der Abrechnungsstelle zu ermöglichen, einen nachfolgenden Geldausgleich zwischen dem ersten Zahlungssystem und dem zweiten Zahlungssystem zu veranlassen.

Dabei ist besonders vorteilhaft, dass der erste Datensatz in seiner Struktur Datensätzen entspricht, die in Telekommunikationsnetzen zur Abrechnung von Telekommunikationsverbindungen genutzt werden und dass eine zur Abrechnung von Telekommunikationsdienstleistungen zwischen Telekommunikationsnetzen vorgesehene Abrechnungsstelle auch dazu verwendet wird, den einen Kaufvorgang betreffenden Geldausgleich zu veranlassen.

Dadurch kann das erfindungsgemäße Verfahren in besonders einfacher und kostengünstiger Art und Weise durch geführt werden, da bereits bekannte Strukturen von Datensätzen sowie bereits bekannte Abläufe in Abrechnungsstellen verwendet werden können, so dass keine kostenintensive Neuentwicklung von neuen Datensatzstrukturen oder neuen Abläufen in Abrechnungsstellen sowie keine Erprobung und Testung von derartigen neuen Strukturen oder Abläufen notwendig ist. Vielmehr können vorteilhafterweise bereits erprobte und funktionierende Strukturen und Abläufe in das erfindungsgemäße Verfahren eingebettet werden, so dass sich auch ein besonders zuverlässiges neues Verfahren ergibt. Weiterhin ist insbesondere vorteilhaft, dass das Zahlungssystem vor dem Veranlassen des Geldausgleiches den ersten und den zweiten Datensatz (die ja denselben Kaufvorgang betreffen) miteinander vergleichen und die Inhalte der Datensätze auf Plausibilität überprüfen kann. Es kann außerdem sichergestellt werden, dass der Geldausgleich nur dann veranlasst wird, wenn der Geldausgleich von beiden Zahlungssystemen angestrebt ist. Dieses wird von den Zahlungssystemen durch Übersendung des jeweiligen Datensatzes an die Abrechnungsstelle dokumentiert. Dadurch werden fehlerhafte Geldausgleiche vermieden und die Sicherheit des anmeldungsgemäßen Verfahrens erhöht.

Bei dem erfindungsgemäßen Verfahren kann die den Käufer betreffende Kaufnachricht von dem zweiten Zahlungssystem zu dem ersten Zahlungssystem übertragen werden.

Das erfindungsgemäße Verfahren kann derart ausgestaltet sein, dass die Geldbelastung des Käufers veranlasst wird, indem ein Abbuchen des Geldbetrages von einem dem Käufer zugeordneten Guthabenkonto des ersten Kommunikationsnetzes veranlasst wird. Hierbei ist besonders vorteilhaft, dass durch die Verwendung des (z. B. vorausbezahlten) Guthabenkontos des Käufers für den Verkäufer kein Zahlungsausfallrisiko besteht. Außerdem ermöglicht diese Ausgestaltung des erfindungsgemäßen Verfahrens die bei Telekommunikationsnetzen zur Bezahlung von Gesprächsgebühren bekannten "Prepaid"-Guthabenkonten zur Geldbelastung des Käufers zu verwenden.

Das erfindungsgemäße Verfahren kann auch so ausgestaltet sein, dass die Geldbelastung des Käufers veranlasst wird, indem ein Erfassen des Geldbetrages in einem Datenspeicher des ersten Kommunikationsnetzes veranlasst wird, um eine spätere Verrechnung mit dem Käufer zu ermöglichen. Ein derartiges Verfahren ermöglicht es in vorteilhafter Weise, die den Kaufvorgang betreffenden Zahlungssummen zeitverzögert über Rechnungen mit dem Käufer zu verrechnen; dazu können beispielsweise die bei Telekommunikationsnetzen bekannten Rechnungserstellungssysteme von Telekommunikationsnetzwerkbetreibern genutzt werden.

Das erfindungsgemäße Verfahren kann auch so ausgestaltet werden, dass als erster Datensatz und als zweiter Datensatz Datensätze mit identischem Dateninhalt erzeugt werden.

Dadurch ist es der Abrechnungsstelle vorteilhafterweise durch einen einfachen Vergleich des ersten und des zweiten Datensatzes möglich, zusammengehörende, d. h. zu einem Kaufvorgang gehörende Datensätze zu erkennen, diese einander zuzuordnen und zur Veranlassung des Geldausgleiches heranzuziehen. Dabei enthält jeder Datensatz die für die Abrechnungsstelle zur Veranlassung des Geldausgleiches erforderlichen Daten. Durch das redundante Übertragen der Daten zu der Abrechnungsstelle ist es sogar möglich, evtl. bei einer Datenübertragung auf tretende Übertragungsfehler zu erkennen und ein Fehlerbehebungsverfahren zu starten.

Bei dem erfindungsgemäßen Verfahren kann der erste Datensatz Daten der Geld-Belastung enthalten und der zweite Datensatz Daten der Geld-Gutschrift enthalten. Hierbei ist vorteilhaft, dass nach Eintreffen des ersten und des zweiten Datensatzes bei der Abrechnungsstelle bei dieser Abrechnungsstelle die für das Ermöglichen des Geldausgleiches notwendigen Informationen bereitstehen und dennoch der erste Datensatz und der zweite Datensatz eine relativ geringe Datenmenge aufweisen. Dadurch werden die Ressourcen des Kommunikationsnetzes bei der Übertragung der Datensätze geschont. Bei dieser Ausgestaltungsform kann die Abrechnungsstelle die zusammengehörenden ersten und zweiten Datensätze beispielsweise anhand eines Kennzeichens (z. B. einer Identifikationsnummer) erkennen, welche sowohl in dem ersten Datensatz als auch in dem zweiten Datensatz enthalten ist.

Das erfindungsgemäße Verfahren kann so ausgestaltet sein, dass das zweite Zahlungssystem einem zweiten Kommunikationsnetz zugeordnet ist, und der erste Datensatz unter Nutzung des ersten Kommunikationsnetzes und der zweite Datensatz unter Nutzung des zweiten Kommunikationsnetzes zu der Abrechnungsstelle übertragen wird. Hierbei ist besonders vorteilhaft, dass der Geldausgleich sogar dann ermöglicht werden kann, wenn das erste Zahlungssystem und der zweite Zahlungssystem verschiedenen Kommunikationsnetzen zugeordnet sind, weil z. B. der Käufer und der Verkäufer unterschiedliche Kommunikationsnetze für ihre jeweiligen Kommunikationsvorgänge nutzen.

Zur weiteren Erläuterung des erfindungsgemäßen Verfahrens ist in der Figur eine schematische Darstellung eines Ausführungsbeispiels des erfindungsgemäßen Verfahrens dargestellt.

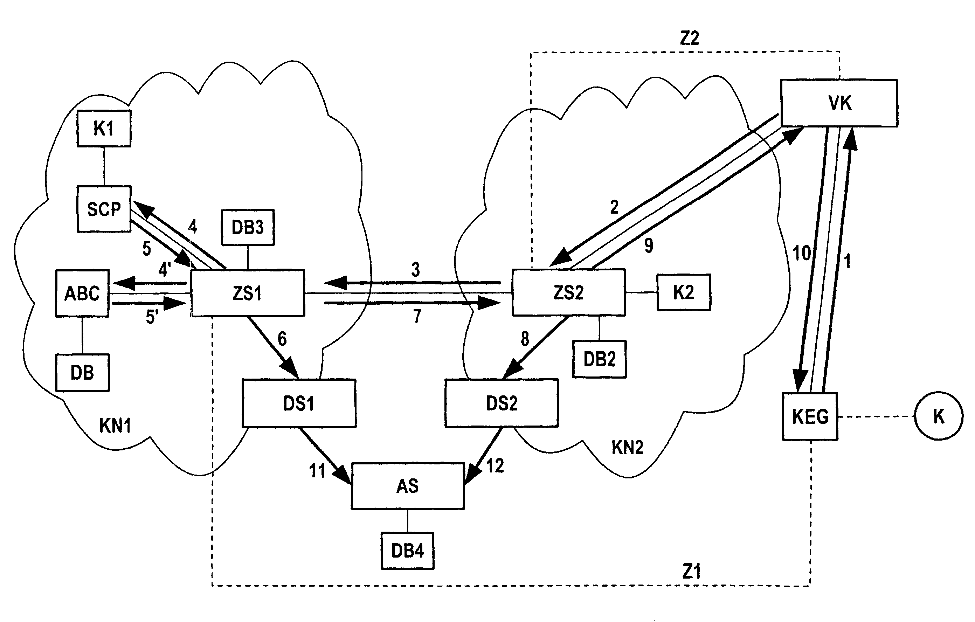

Auf der linken Seite der Figur ist ein erstes Kommunikationsnetz KN1 dargestellt, welches ein erstes Zahlungssystem ZS1 enthält. Dabei kann das erste Zahlungssystem ZS1 beispielsweise in Form eines Rechners ausgebildet sein, der mit dem ersten Kommunikationsnetz KN1 verbunden ist oder der einen "Netzknoten" des ersten Kommunikationsnetzes KN1 bildet. Auf der rechten Seite der Figur 1 ist ein Käufer K symbolisch dargestellt, der über ein Kommunikationsendgerät KEG (z.B. ein Mobiltelefon oder einen Computer mit Internetzugang) verfügt, mit welchem er zu einem Verkäufer VK (bzw. zu dessen nicht näher dargestellten Verkäufer-Kommunikationsendgerät) Kontakt aufnimmt, um Kaufvorgänge durchzuführen. Zum Durchführen des Kaufvorganges ist die Benutzung eines Mobiltelefons nicht notwendigerweise erforderlich; die Benutzung eines Mobiltelefons stellt nur eine von vielen Möglichkeiten dar. In diesem Ausführungsbeispiel ist das erste Kommunikationsnetz KN1 das Mobiltelefon-Heimatnetzwerk des Käufers K (der Käufer K ist also Mobilfunkteilnehmer bei einem Betreiber des Kommunikationsnetzes KN1); daher nimmt der Käufer K die Dienste eines dem ersten Kommunikationsnetz KN1 zugeordneten Zahlungsdienstleisters in Anspruch. Dieser Zahlungsdienstleister benutzt zur Abwicklung von Zahlungsvorgängen das erste Zahlungssystem ZS1. Daher ist das Kommunikationsendgerät KEG des Käufers dem ersten Zahlungsysstem ZS1 zugeordnet; diese Zuordnung ist durch eine gestrichelte Linie Z1 symbolisiert. Bei dem ersten Kommunikationsnetz KN1 kann es sich z. B. um ein Mobiltelefon-Heimatnetz (Home Network) des Käufers K handeln, beispielsweise um ein GSM-Netz (GSM = Global System for Mobile Communication).

Der Verkäufer VK nutzt zur Abrechnung seiner Zahlungsvorgänge die Dienste eines zweiten Zahlungsleisters, welcher dem zweiten Kommunikationsnetz KN2 zugeordnet ist. Dieser zweite Zahlungsdienstleister benutzt dabei die technischen Einrichtungen eines zweiten Zahlungssystems ZS2, welches beispielsweise einen Netzknoten des zweiten Kommunikationsnetzes KN2 bildet. Da der Verkäufer VK regelmäßig das zweite Zahlungssystem ZS2 für die Abwicklung seiner Zahlungsvorgänge nutzt, ist der Verkäufer VK (bzw. dessen Kommunikationsendgerät) dem zweiten Zahlungssystem ZS2 zugeordnet; dies ist durch die gestrichelte Linie Z2 symbolisiert. Bei dem zweiten Kommunikationsnetz KN2 kann es sich z. B. um ein Mobiltelefon-Heimatnetz des Verkäufers VK handeln, beispielsweise um ein GSM-Netz.

Zur Tätigung eines Kaufvorganges sendet der Käufer K mit Hilfe seines Kommunikationsendgerätes KEG eine Kaufanforderungsnachricht 1 an den Verkäufer VK. Der Verkäufer VK ermittelt die zu diesem Kaufanforderungswunsch zugehörige Kaufsumme und sendet eine Informationen über die Kaufsumme und den Käufer K enthaltende Zahlnachricht 2 an das zweite Zahlungssystem ZS2. Das zweite Zahlungssystem ZS2 erkennt, dass das Kommunikationsendgerät KEG des Käufers nicht dem zweiten Zahlungssystem ZS2 zugeordnet ist. Vielmehr erkennt das zweite Zahlungssystem ZS2 z. B. aus einer mit der Zahlnachricht 2 mitgelieferten Mobilfunkrufnummer MSISDN des Kommunikationsendgerätes KEG (die eine Information über den Käufer K darstellt), dass es sich bei dem ersten Kommunikationsnetz KN1 um das Heimatnetz des Kommunikationsendgerätes KEG handelt. Daraufhin sendet das zweite Zahlungssystem ZS2 eine Information über den Geldbetrag und den Käufer bzw. dessen Kommunikationsendgerät KEG enthaltende Kaufnachricht 3 an das erste Zahlungssystem ZS1 des ersten Kommunikationsnetzes KN1. Dies geschieht, da dem zweiten Zahlungssystem ZS2 die Information vorliegt, dass das dem Kommunikationsendgerät KEG zugeordnete erste Zahlungssystem ZS1 sich in dessen Heimatnetz (also in dem ersten Kommunikationsnetz KN1) befindet. Die Information, dass das Kommunikationsendgerät KEG dem ersten Zahlungssystem ZS1 zugeordnet ist, kann das zweite Zahlungssystem ZS2 jedoch auch auf andere Art und Weise erhalten; beispielsweise kann es diese Information aus einer zweiten Datenbank DB2 des zweiten Kommunikationsnetzes KN2 auslesen, wobei in der zweiten Datenbank DB2 Daten über Käufer, deren Kommunikationsendgeräte und die diesen Kommunikationsendgeräten zugeordneten Zahlungssysteme abgelegt sind.

Das erste Zahlungssystem ZS1 liest nun z. B. aus einem Datenspeicher DB3 die Information aus, dass der Käufer K seine Zahlungstransaktionen bevorzugt unter Nutzung eines ihm zugeordneten Guthabenkontos K1 abwickelt und sendet daher eine Abbuchungsnachricht 4 an einen Dienstesteuerungspunkt SCP (SCP = Service Control Point) des eine Struktur eines intelligenten Netzes IN (IN = Intelligent Network) aufweisenden ersten Kommunikationsnetzes KN1 und veranlasst damit eine Geldbelastung des Käufers. Daraufhin veranlasst der Dienstesteuerungspunkt SCP ein Abbuchen des Geldbetrages von dem Guthabenkonto K1 des Käufers. Nach erfolgreicher Abbuchung sendet der Dienstesteuerungspunkt SCP eine Abbuchungserfolgsnachricht 5 an das erste Zahlungssystem ZS1. Daraufhin erzeugt das erste Zahlungssystem ZS1 einen ersten den Kaufvorgang betreffenden Datensatz DS1. Dieser Datensatz DS1 weist ein Format eines sog. "TAP-3"-Datensatzes ("TAP3-Record")auf.

"TAP3"-Datensätze werden bei Mobilfunknetzen nach dem GSM-Standard u.a. dazu verwendet, bei einem zum Aufbau von netzüberschreitenden Kommunikationsverbindungen genutzten "Roaming"-Verfahren eine Abrechnung der Telekommunikationsgebühren zwischen den beteiligten Kommunikationsnetzen zu ermöglichen, indem mit Hilfe dieser "TAP3-Records" z. B. die zeitliche Dauer der Telekommunikationsverbindungen zu einer Telekommunikationsverbindungs-Abrechnungsstelle übertragen wird. Es existieren in den Mobilfunknetzen sog. Roaming-Mechanismen, die es einem Kunden eines ersten Mobilfunknetzes ermöglichen, Telekommunikationsdienste (wie Nutzung von Sprachtelekommunikationsverbindungen oder Anrufbeantworterfunktionen - Voice Mailbox) eines anderen Mobilfunknetzes zu nutzen. Zwischen den jeweiligen Netzen wird ein finanzieller Ausgleich für die Benutzung der Dienste durchgeführt, indem Datensätze, welche ein bestimmtes Format aufweisen, von den Netzwerkoperatoren der Telekommunikationsnetze an eine externe Abrechnungsstelle (ein sog. Clearinghouse) gesendet werden, woraufhin diese Abrechnungsstelle Ausgleichszahlungen zwischen den Netzwerkoperatoren organisiert. In Telekommunikationsnetzen nach dem GSM-Standard werden Datensätze ("TAP-Records") in dem Datenformat TAP3 verwendet; in nordamerikanischen Telekommunikationsnetzen, welche die Verfahren "Analoges AMS", "IS-136TDMA" oder "IS-95CDMA" nutzen, werden Datensätze im Format CIBER (CIBER = Cellular Intercarrier Billing Exchange Roamer) verwendet.

Das Abrechnen von Sprachtelekommunikationsverbindungen unter Nutzung von TAP-Datensätzen ist in dem Standard GSM 12.05 (ETSI TS 100 616 V7.0.1 (1999-07), Technical Specification, "Digital cellular telecommunications system (Phase 2+); Event and call data), insb. in Kap. 6.1.2 "Accounting" beschrieben.

Der Datensatz DS1 weist also erfindungsgemäß eine Struktur von solchen Datensätzen auf, die in Telekommunikationsnetzen zur Abrechung von Telekommunikationsverbindungen genutzt werden, beinhaltet aber Informationen über den von Telekommunikationsverbindungen unabhängigen Kaufvorgang. Als abzurechnende Größe ist in diesem ersten Datensatz DS1 der den Kaufvorgang betreffende Zahlungsbetrag (beispielsweise 100 ∈) gespeichert (im Unterschied zu den TAP3-Records, in denen z. B. Angaben über die Dauer der hergestellten Telekommunikationsverbindungen enthalten sind). Der erste Datensatz DS1 enthält alle Informationen über den Kaufvorgang, die für die Abrechungsstelle AS notwendig sind, um später einen Geldausgleich zwischen dem ersten Zahlungssystem ZS1 und dem zweiten Zahlungssystem ZS2 vorzunehmen. Diese Informationen beinhalten Informationen über die beiden am späteren Geldausgleich beteiligten Zahlungssysteme (also hier das erste Zahlungssystem ZS1 und das zweite Zahlungssystem ZS2) sowie den Geldbetrag (z. B. 100 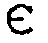 ) und die "Zahlungsrichtung" (d. h. das Zahlungssystem ZS1 hat dem Zahlungssystem ZS2 den Geldbetrag in Höhe von 100 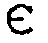 zu zahlen). Weiterhin kann der erste Datensatz DS1 auch Informationen über den Käufer K und den Verkäufer VK, über den Gegenstand des Kaufvorganges sowie über Datum und Uhrzeit der Abbuchung des Geldbetrages vom Guthabenkonto K1 enthalten.

Durch Übersenden einer Bestätigungsnachricht 7 informiert das erste Zahlungssystem ZS1 das zweite Zahlungssystem ZS2 über die erfolgte Geldbelastung des Käufers (d.h. das erfolgreiche Abbuchen des Geldbetrages von dessen Guthabenkonto K1). Daraufhin veranlasst das zweite Zahlungssystem ZS2 eine Geldgutschrift auf einem dem Verkäufer VK zugeordneten Verkäuferkonto K2; auf diesem Verkäuferkonto K2 wird der Geldbetrag (ggf. unter Abzug von Gebühren für die Durchführung des Zahlungsvorganges) aufgebucht. Ab diesem Zeitpunkt kann der Verkäufer VK über diesen Geldbetrag verfügen. Daraufhin erzeugt das zweite Zahlungssystem ZS2 einen zweiten Datensatz DS2, der in seiner Struktur ebenfalls Datensätzen entspricht, die in Telekommunikationsnetzen zur Abrechung von Telekommunikationsverbindungen genutzt werden. Dieser zweite Datensatz DS2 kann identisch dem Datensatz DS1 ausgebildet sein, d. h. er kann ebenfalls die Struktur eines TAP3-Records aufweisen und die gleichen Dateninhalte wie der erste Datensatz DS1 besitzen. Daraufhin sendet das zweite Zahlungssystem ZS2 eine Mitteilungsnachricht 9 an das Kommunikationsendgerät des Verkäufers VK, mit der der Verkäufer über die erfolgreiche den Kaufvorgang betreffende Zahlung in Kenntnis gesetzt wird. Der Verkäufer VK kann nun den Käufer K mittels einer Informationsnachricht 10 z. B. über die erfolgreiche Zahlung des Käufers und über den Stand der Auslieferung des Produktes bzw. der Erbringung der Dienstleistung informieren. Wenn bei dem Kaufvorgang von dem Käufer Informationen oder Daten gekauft wurden, dann können diese Informationen und Daten mit der Informationsnachricht 10 direkt zu dem Kommunikationsendgerät KEG des Käufers K übertragen werden.

Von dem ersten Zahlungssystem ZS1 wird der erste Datensatz DS1 und von dem zweiten Zahlungssystem ZS2 wird der zweite Datensatz DS2 zu der Abrechnungsstelle AS übertragen (Pfeile 11 und 12). Diese Übertragung kann direkt nach der Erzeugung des ersten Datensatzes bzw. des zweiten Datensatzes DS2 erfolgen; sie kann aber auch zeitverzögert in bestimmten vorgegebenen Zeitabständen durchgeführt werden. Die Übertragung der Datensätze DS1 und DS2 zu der Abrechnungsstelle AS kann beispielsweise mit Hilfe der bekannten Datenübertragungsverfahren FTP (FTP = File Transfer Protocol) oder FTAM (FTAM = File Transfer, Access and Management) durchgeführt werden.

Ebenso ist es möglich, dass die Abrechnungsstelle AS zu bestimmten vorgegebenen Zeitpunkten den ersten Datensatz DS1 zusammen mit anderen von dem ersten Zahlungssystem ZS1 erzeugten Datensätzen abfordert; ebenso kann die Abrechnungsstelle AS von dem zweiten Zahlungssystem ZS2 den zweiten Datensatz DS2 zusammen mit anderen von dem zweiten Zahlungssystem ZS2 erzeugten Datensätzen abfordern. Die Datensätze werden von der Abrechnungsstelle AS gesammelt, gespeichert und zu weiteren vorbestimmten Zeitpunkten (z. B. am Monatsende) veranlasst die Abrechnungsstelle AS den Geldausgleich zwischen dem ersten Zahlungssystem ZS1 und dem zweiten Zahlungssystem ZS2.

Dies kann beispielsweise dadurch geschehen, dass die Abrechnungsstelle AS bei Auswertung sämtlicher einen bestimmten Zeitraum betreffender Datensätze (welche zu ihr übertragen wurden und in Datenspeichern DB4 der Abrechnungsstelle gespeichert sind) all jene Geldbeträge aufsummiert, die von dem ersten Zahlungssystem ZS1 zu den zweiten Zahlungssystem ZS2 für den Geldausgleich übertragen werden müssen (da dem ersten Zahlungssystem ZS1 - wie in der Figur dargestellt - Käufer zugeordnet sind, welche Kaufvorgänge bei Verkäufern durchführen, die dem zweiten Zahlungssystem ZS2 zugeordnet sind). Ebenso werden von der Abrechnungsstelle AS diejenigen Geldbeträge aufsummiert, welche von dem zweiten Zahlungssystem ZS2 zu dem ersten Zahlungssystem ZS1 bei dem Geldausgleich übertragen werden müssen (da auch dem zweiten Zahlungssystem ZS2 - in der Figur nicht dargestellt -in dem jeweiligen Zeitabschnitt Käufer zugeordnet waren, welche bei dem ersten Zahlungssystem ZS1 zugeordneten Verkäufern Kaufvorgänge durchgeführt haben). Die Abrechnungsstelle AS bildet nun die Differenz zwischen der ersten, von dem ersten Zahlungssystem ZS1 zu dem zweiten Zahlungssystem ZS2 zu übertragenden Geldsumme und der zweiten, von dem zweiten Zahlungssystem ZS2 zu dem ersten Zahlungssystem ZS1 zu übertragenden Geldsumme und veranlasst, dass diese Differenz entweder von dem ersten Zahlungssystem ZS1 zu dem zweiten Zahlungssystem ZS2 oder von dem zweiten Zahlungssystem ZS2 zu dem ersten Zahlungssystem ZS1 übertragen wird. Die Richtung der Geldübertragung ergibt sich aus den Vorzeichen des Differenzwertes. Es wird also der Saldo zwischen dem ersten Zahlungssystem ZS1 und dem zweiten Zahlungssystem ZS2 berechnet und unter Nutzung der Höhe dieses Saldo-Wertes wird von der Abrechnungsstelle AS daraufhin der Geldausgleich veranlasst.

Abweichend von dem bisher beschriebenen Verfahren kann die Abrechnungsstelle AS schon nach Erhalt der ersten Datensatzes DS1 von dem ersten Zahlungssystem ZS1 den Geldausgleich zwischen dem ersten Zahlungssystem und dem zweiten Zahlungssystem veranlassen, wenn der erste Datensatz sämtliche zu dieser Veranlassung notwendigen Daten enthält. Ein zweiter Datensatz, welcher denselben Kaufvorgang betrifft, muß in diesem Fall weder erzeugt noch zu der Abrechnungsstelle AS übertragen werden.

Wenn - abweichend von dem bisher beschriebenen Verfahren - in dem ersten Zahlungssystem ZS1 des ersten Kommunikationsnetzes KN1 die Information vorliegt, dass der Käufer K normalerweise Zahlungen per Rechnung bezahlt (und nicht wie oben beschrieben über das Guthabenkonto K1), so kann von dem ersten Zahlungssystem ZS1 eine der Nachricht 4 ähnelnde Nachricht 4' anstelle zu dem Dienstesteuerungspunkt SCP zu einem Rechnungs-Sammelzentrum ABC geleitet werden. Dadurch wird das Rechnungs-Sammelzentrum ABC (ABC = Administration and Billing Center) veranlasst, den Zahlungsbetrag zur späteren Verrechnung mit dem Käufer zu erfassen. Zu einem späteren Zeitpunkt wird dann von dem Rechnungs-Sammelzentrum ABC eine Rechnung erstellt und an den Käufer K gesendet. Das Rechnungs-Sammelzentrum ABC sendet sofort (in Realzeit - real time) nach der Erfassung des Geldbetrages eine ähnlich der Nachricht 5 aufgebaute Nachricht 5' zu dem ersten Zahlungssystem ZS1, woraufhin das Verfahren in bekannter Weise weitergeführt wird. Bei einer derartigen Ausgestaltung des Verfahrens ist es möglich, das in vielen Telekommunikationsnetzen gebräuchliche Rechnungserstellungsverfahren auch zum Ermöglichen des Geldausgleiches bei dem erfindungsgemäßen Verfahren zu nutzen.

Zum Ermöglichen des Geldausgleiches können auch Banken oder Kreditkartenorganisationen herangezogen werden, indem von dem ersten Zahlungssystem ZS1 entsprechende Nachrichten zu technischen Einrichtungen der Banken oder Kreditkartenorganisationen geleitet werden. Von dem ersten Zahlungssystem ZS1 können auch Währungsumrechnungen durchgeführt werden, wenn der Käufer eine andere Geldwährung benutzt als der Verkäufer.

Bei dem beschriebenen Verfahren ist besonders vorteilhaft, dass bestehende technische Einrichtungen, welche für die Abrechnung von z. B. Sprachtelekommunikationsverbindungen bei Roaming-Verfahren benutzt werden, auch zum Ermöglichen eines einen Kaufvorgang betreffenden Geldausgleiches zwischen verschiedenen Zahlungssystemen verschiedener Kommunikationsnetze benutzt werden können. Dabei können sowohl bereits bestehende Abrechnungsstellen (Clearinghouses) als auch bereits bestehende Datensatzformate benutzt werden, so dass das erfindungsgemäße Verfahren einfach, sehr preisgünstig und - da bereits getestete technische Einrichtungen und Abläufe verwendet werden - mit geringem Aufwand realisiert werden kann.

Zudem können bestehende Roaming-Abkommen zwischen den Netzwerkbetreibern der Kommunikationsnetze genutzt werden; diese brauchen ggf. nur dahingehend erweitert werden, dass sie neben Telekommunikationsdiensten auch Kaufvorgänge betreffende Geldausgleichsvorgänge umfassen.

Bei den Abrechnungsstellen braucht es sich um keine eigenständigen, von den Kommunikationsnetzen getrennten technischen Einrichtungen (wie in der Figur dargestellt) zu handeln; die Funktion der Abrechnungsstelle kann genauso auch von einer netzwerkinternen Einrichtung ausgeführt werden.

## Patentansprüche

1. Verfahren zum Ermöglichen eines einen Kaufvorgang (1) betreffenden Geldausgleiches zwischen einem ersten Zahlungssystem (ZS1) eines ersten Kommunikationsnetzes (KN1) und einem zweiten Zahlungssystem (ZS2), wobei dem ersten Zahlungssystem (ZS1) ein Käufer (K) und dem zweiten Zahlungssystem (ZS2) ein Verkäufer (VK) zugeordnet ist, wobei bei dem Verfahren
- bei Eintreffen einer den Käufer (K) betreffenden Kaufnachricht (3) bei dem ersten Zahlungssystem (ZS1) von diesem ersten Zahlungssystem (ZS1) eine Geld-Belastung des Käufers (K) mit einem von der Kaufnachricht (3) abhängigen Geldbetrag veranlasst (4) wird,
- von dem ersten Zahlungssystem (ZS1) ein erster, den Kaufvorgang betreffender Datensatz (DS1) erzeugt wird, der in seiner Struktur Datensätzen entspricht, die in Telekommunikationsnetzen zur Abrechnung von Telekommunikationsverbindungen genutzt werden,
- von dem ersten Zahlungssystem (ZS1) eine Bestätigungsnachricht (7) über die Geld-Belastung an das zweite Zahlungssystem (ZS2) übertragen wird,
- daraufhin von dem zweiten Zahlungssystem (ZS2) eine Geld-Gutschrift auf einem dem Verkäufer (VK) zugeordneten Verkäuferkonto (K2) veranlasst wird,
- von dem zweiten Zahlungssystem (ZS2) ein zweiter, den Kaufvorgang betreffender Datensatz (DS2) erzeugt wird, der in seiner Struktur Datensätzen entspricht, die in Telekommunikationsnetzen zur Abrechnung von Telekommunikationsverbindungen genutzt werden, wobei als erster Datensatz (DS1) und als zweiter Datensatz (DS2) einander zuordenbare Datensätze erzeugt werden,
- von dem ersten Zahlungssystem (ZS1) der erste Datensatz (DS1) zu einer zur Abrechnung von Telekommunikationsdienstleistungen zwischen Telekommunikationsnetzen vorgesehenen Abrechnungsstelle (AS) übertragen wird und von dem zweiten Zahlungssystem (ZS2) der zweite Datensatz (DS2) zu der Abrechnungsstelle (AS) übertragen wird, um der Abrechnungsstelle (AS) zu ermöglichen, einen nachfolgenden Geldausgleich zwischen dem ersten Zahlungssystem (ZS1) und dem zweiten Zahlungssystem (ZS2) zu veranlassen.

2. Verfahren nach Anspruch 1,
**dadurch gekennzeichnet, dass**
- die den Käufer (K) betreffende Kaufnachricht (3) von dem zweiten Zahlungssystem (ZS2) zu dem ersten Zahlungssystem (ZS1) übertragen wird.

3. Verfahren nach Anspruch 1 oder 2,
**dadurch gekennzeichnet, dass**
- die Geldbelastung des Käufers (K) veranlasst wird, indem ein Abbuchen des Geldbetrages von einem dem Käufer (K) zugeordneten Guthabenkonto (K1) des ersten Kommunikationsnetzes (KN1) veranlasst wird.

4. Verfahren nach einem der vorhergehenden Ansprüche,
**dadurch gekennzeichnet, dass**
- die Geldbelastung des Käufers (K) veranlasst wird, indem ein Erfassen des Geldbetrages in einem Datenspeicher (DB) des ersten Kommunikationsnetzes (KN1) veranlasst wird, um eine spätere Verrechnung mit dem Käufer (K) zu ermöglichen.

5. Verfahren nach einem der vorhergehenden Ansprüche,
**dadurch gekennzeichnet, dass**
- als erster Datensatz (DS1) und als zweiter Datensatz (DS2) Datensätze mit identischem Dateninhalt erzeugt werden.

6. Verfahren nach einem der vorhergehenden Ansprüche,
**dadurch gekennzeichnet, dass**
- der erste Datensatz (DS1) Daten der Geld-Belastung enthält, und
- der zweite Datensatz (DS2) Daten der Geld-Gutschrift enthält.

7. Verfahren nach einem der vorhergehenden Ansprüche,
**dadurch gekennzeichnet, dass**
- das zweite Zahlungssystem (ZS2) einem zweiten Kommunikationsnetz (KN2) zugeordnet ist, und der erste Datensatz (DS1) unter Nutzung des ersten Kommunikationsnetzes (KN1) und der zweite Datensatz (DS2) unter Nutzung des zweiten Kommunikationsnetzes (KN2) zu der Abrechnungsstelle (AS) übertragen wird.

## Claims

1. Method for allowing a cash adjustment, relating to a purchase transaction (1), between a first payment system (ZS1) in a first communication network (KN1) and a second payment system (ZS2), the first payment system (ZS1) having an associated purchaser (K) and the second payment system (ZS2) having an associated vendor (VK), in which method
- upon arrival of a purchase message (3) relating to the purchaser (K) in the first payment system (ZS1), this first payment system (ZS1) charges (4) the purchaser (K) a sum of money which is dependent on the purchase message (3),
- the first payment system (ZS1) produces a first data record (DS1) which relates to the purchase transaction and whose structure corresponds to that of data records which are used in telecommunication networks for the purpose of billing for telecommunication connections,
- the first payment system (ZS1) transmits an acknowledgement message (7) relating to the charge to the second payment system (ZS2),
- the second payment system (ZS2) then credits a vendor account (K2) associated with the vendor (VK),
- the second payment system (ZS2) produces a second data record (DS2) which relates to the purchase transaction and whose structure corresponds to that of data records which are used in telecommunication networks for the purpose of billing for telecommunication connections, the first data record (DS1) and the second data record (DS2) produced being data records which can be associated with one another, and
- the first payment system (ZS1) transmits the first data record (DS1) to a billing centre (AS), provided for the purpose of billing for telecommunication services between telecommunication networks, and the second payment system (ZS2) transmits the second data record (DS2) to the billing centre (AS), in order to allow the billing centre (AS) to make a subsequent cash adjustment between the first payment system (ZS1) and the second payment system (ZS2).

2. Method according to Claim 1,
**characterized in that**
- the purchase message (3) which relates to the purchaser (K) is transmitted from the second payment system (ZS2) to the first payment system (ZS1).

3. Method according to Claim 1 or 2,
**characterized in that**
- the purchaser (K) is charged by debiting the sum of money from a credit account (K1) associated with the purchaser (K) in the first communication network (KN1).

4. Method according to one of the preceding claims,
**characterized in that**
- the purchaser (K) is charged by recording the sum of money in a data store (DB) in the first communication network (KN1) in order to allow later settlement with the purchaser (K).

5. Method according to one of the preceding claims,
**characterized in that**
- the first data record (DS1) and the second data record (DS2) produced are data records having an identical data content.

6. Method according to one of the preceding claims,
**characterized in that**
- the first data record (DS1) contains data relating to the charge, and
- the second data record (DS2) contains data relating to the credit.

7. Method as claimed in one of the preceding claims,
**characterized in that**
- the second payment system (ZS2) is associated with a second communication network (KN2), and the first data record (DS1) is transmitted to the billing centre (AS) using the first communication network (KN1), and the second data record (DS2) is transmitted to the billing centre (AS) using the second communication network (KN2).

## Revendications

1. Procédé pour permettre de compenser une somme d'argent concernant une opération commerciale (1) entre un premier système de paiement (ZS1) d'un premier réseau de communication (KN1) et un deuxième système de paiement (ZS2), un acheteur (K) étant associé au premier système de paiement (ZS1) et un vendeur (VK) au deuxième système de paiement (ZS2), procédé dans lequel
- lorsqu'un message d'achat (3) concernant l'acheteur (K) arrive au premier système de paiement (ZS1), ce premier système de paiement (ZS1) autorise (4) que l'acheteur (K) soit débité d'une somme d'argent qui dépend du message d'achat (3),
- le premier système de paiement (ZS1) produit un premier ensemble (DS1) de données se rapportant à l'opération commerciale, ensemble de données dont la structure correspond à des ensemble de données qui sont utilisés dans des réseaux de télécommunication pour compenser des liaisons par télécommunication,
- le premier système de paiement (ZS1) transmet au deuxième système de paiement (ZS2) un message de confirmation (7) concernant le débit de la somme d'argent,
- puis le deuxième système de paiement (ZS2) autorise un crédit sur un compte de vendeur (K2) associé au vendeur (VK),
- le deuxième système de paiement (ZS2) produit un deuxième ensemble (DS2) de données se rapportant à l'opération commerciale, ensemble de données dont la structure correspond à des ensemble de données qui sont utilisés dans des réseaux de télécommunication pour compenser des liaisons par télécommunication, des ensembles de données étant alors produits, qui peuvent être associés l'un à l'autre pour servir de premier ensemble de données (DS1) et de deuxième ensemble de données (DS2),
- le premier ensemble (DS1) de données est transmis par le premier système de paiement (ZS1) à une caisse de compensation (AS) prévue pour compenser des services de télécommunication entre des réseaux de télécommunication et le deuxième ensemble (DS2) de données est transmis par le deuxième système de paiement (ZS2) à la caisse de compensation (AS) afin de permettre à la caisse de compensation (AS) d'autoriser qu'une somme d'argent soit ensuite compensée entre le premier système de paiement (ZS1) et le deuxième système de paiement (ZS2).

2. Procédé selon la revendication 1, **caractérisé en ce que**
- le message d'achat (3) concernant l'acheteur (K) est transmis par le deuxième système de paiement (ZS2) au premier système de paiement (ZS1).

3. Procédé selon la revendication 1 ou 2, **caractérisé en ce que**
- on autorise que l'acheteur (K) soit débité en autorisant que la somme d'argent soit défalquée d'un compte courant (K1 ) - associé à l'acheteur (K) - du premier réseau de communication (KN1).

4. Procédé selon l'une des revendications précédentes, **caractérisé en ce que**
- on autorise que l'acheteur (K) soit débité en autorisant que la somme d'argent soit comptabilisée dans une mémoire de données (DB) du premier réseau de communication (KN1) pour permettre par la suite d'imputer une somme à l'acheteur (K).

5. Procédé selon l'une des revendications précédentes, **caractérisé en ce que**
- on produit des ensembles de données dont le contenu de données est identique pour servir de premier ensemble (DS1) de données et de deuxième ensemble (DS2) de données.

6. Procédé selon l'une des revendications précédentes, **caractérisé en ce que**
- le premier ensemble (DS1) de données contient des données pour le débit et
- le deuxième ensemble (DS2) de données contient des données pour le crédit.

7. Procédé selon l'une des revendications précédentes, **caractérisé en ce que**
- le deuxième système de paiement (ZS2) est associé à un deuxième réseau de communication (KN2) et le premier ensemble (DS1) de données est transmis à la caisse de compensation (AS) en utilisant le premier réseau de communication (KN1) et le deuxième ensemble (DS2) de données en utilisant le deuxième réseau de communication (KN2).
